# EUROPÄISCHE PATENTSCHRIFT

(11) **EP 1 386 530 B1**
(45) Veröffentlichungstag und Bekanntmachung des Hinweises auf die Patenterteilung: **09.11.2005**
(21) Anmeldenummer: 03014472.9
(22) Anmeldetag: 02.07.2003
(51) Int. Cl.: A01D 34/82, A01D 43/063

(54) **Rasenmäher**
Lawn mower
Tondeuse à gazon

(30) Priorität: 29.07.2002 DE 10234619; 18.02.2003 DE 10306637
(43) Veröffentlichungstag der Anmeldung: 04.02.2004
(73) Patentinhaber: Kress, Werner, D-89077 Ulm (DE)
(72) Erfinder: Kress, Werner, 89077 Ulm (DE)
(74) Vertreter: Sawodny, Michael-Wolfgang

(56) Entgegenhaltungen:
- EP-A- 0 610 062
- EP-A- 1 304 027
- DE-U- 20 107 166
- US-A- 4 310 998

## Beschreibung

Die Erfindung betrifft einen Rasenmäher mit Motorantrieb. Dabei kommt als Motor in erster Linie ein Benzinmotor in Betracht, aber auch ein Elektromotor.

Ein solcher Rasenmäher weist eine Schneideinrichtung auf. Die Schneideinrichtung besteht vorzugsweise aus einem langgestreckten Messerblatt, das in der Mitte seiner Länge um eine vertikale Achse drehbar gelagert ist. Das Messerblatt ist an seinen beiden Längenabschnitten beidseits der genannten Drehachse jeweils mit einer Schneide versehen, der eine Längenabschnitt auf der einen Schmalkante, und der andere Längenabschnitt auf der gegenüberliegenden Schmalkante. Das Messerblatt ist in vielen Fällen im wesentlichen horizontal angeordnet. Es kann auch eine gewisse Neigung gegen die Horizontalebene aufweisen, so dass die Schneideinrichtung nicht nur ihre Schneid- (oder Abschlag-) Funktion erfüllt, sondern auch eine Förderfunktion. Hierdurch wird ein Luftstrom erzeugt, der das abgeschlagene Gras in eine bestimmte Richtung fördert.

Motor und Schneideinrichtung sind von einem Gehäuse umschlossen. Das Gehäuse kann von einem Fahrgestell getragen sein oder selbst Räder aufweisen, die auf dem Rasen abrollen. Am Gehäuse ist ein Holm befestigt, mit dem der Rasenmäher manipuliert wird. Die Bedienungsperson greift dabei am Holm an, um den Rasenmäher über den Rasen hinweg zu führen und somit dessen Bewegungsbahn zu steuern. Außerdem bringt die Bedienungsperson über den Holm die Schubkraft zum Verfahren des Rasenmähers auf. Es gibt aber auch Rasenmäher, bei denen die genannten Räder einen Antrieb aufweisen, so dass die Bedienungsperson mittels des Holms lediglich noch die Steuerung auszuführen braucht.

Das Gehäuse weist einen Auslass auf, durch welchen der grasführende Luftstrom austritt. Der Luftstrom kann dabei an einer Seite des Rasenmähers austreten - das heißt seitlich der Bewegungsbahn, die der Rasenmäher ausführt. In neuerer Zeit sind aber Rasenmäher im allgemeinen mit Grasfangbehältem ausgestattet. Ein solcher Grasfangbehälter hat eine Öffnung, die dem genannten Auslass des Gehäuses entspricht, und die an das Gehäuse über den Gehäuseauslass angeschlossen ist. Der Grasfangbehälter befindet sich meist im hinteren Bereich des Gehäuses.

Der Grasfangbehälter kann einen Sack aus Gewebe oder anderen schlaffen Materialien aufweisen. Er kann aber auch aus einer Box mit starren Wänden bestehen. In jedem Falle ist die Wandung oder wenigstens ein Teil der Wandung des Grasfangbehälters luftdurchlässig. Handelt es sich um ein Gewebe, so ist dies von Natur aus porös. Handelt es sich um eine Box mit starren Wänden, so sind die Wände oder wenigstens einige der Wände perforiert. Bei Rasenmähern ohne Grasfangbehälter ist der Gehäuseauslaß mit einer Klappe versehen, die um eine Schwenkachse schwenkbar gelagert ist. Der grasführende Luftstrom prallt gegen die Platte und öffnet diese, so daß der grasführende Luftstrom austreten kann.

Ein äußerst wichtiger Aspekt bei der Konstruktion eines Rasenmähers ist dessen Geräusch während des Betriebes. Ein besonders Problem besteht darin, dass Rasenmäher im allgemeinen in Wohngebieten betrieben werden. Weiterhin werden sie während der Freizeit des Besitzers betrieben. Dies ist aber gerade jene Zeit, in der andere Personen den Lärm als besonders störend empfinden. Deshalb haben sich die Konstrukteure schon von jeher bemüht, die Geräuschentwicklung von Rasenmähern zu minimieren. Dabei führen die Maßnahmen zur Geräuschverminderung häufig zu einer Verschlechterung des Wirkungsgrades des Rasenmähers. Die beiden Ziele Geräuschminderung und Effizienz des Rasenmähers kollidieren somit häufig miteinander.

Bei Rasenmähern lassen sich drei verschiedene Geräuschquellen identifizieren, die alle zu einem Gesamt-Geräuschpegel beitragen: der Motor, mechanische Bauteile, die sich lösen und einander anschlagen können, sowie aerodynamisch relevante Bauteile.

Beim Motor ist verständlicherweise die Bauart von großer Bedeutung. Ein Verbrennungsmotor wird immer einen wesentlich höheren Geräuschpegel erzeugen, als ein Elektromotor. Ungeachtet der Motorart wird das hiervon abgegebene Geräusch durch entsprechende Motorkapselung gedämmt. Jedoch soll auf das Problem der Motor-Geräuschdämmung im Rahmen dieser Erfindung nicht eingegangen werden.

Gleiches gilt für die mechanischen Bauteile.

Die Erfindung befasst sich mit dem Problem jenes Geräusches, das durch aerodynamisch relevante Bauteile und Vorgänge erzeugt wird, beispielsweise das vom Messer erzeugte Geräusch. Solche Geräusche entstehen überall dort, wo ein Luftstrom einen nicht-laminaren Zustand aufweist. Das Geräusch entsteht insbesondere beim Vorbeistreichen des Lufstromes an scharfen Kanten wie beispielsweise am Übergang zwischen dem Gehäuse und dem Grasfangbehälter. Der Auslass des Gehäuses und damit auch der Einlass des Grasfangbehälters weisen scharfe Kanten auf. Beim Eintritt in den Grasfangbehälter kommt es zu Turbulenzen. Eine weitere Geräuschquelle aerodynamischer Natur ist die Wandung des Grasfangbehälters. Durch die zahlreichen, hier vorhandenen Öffnungen - Perforationen beim Behälter mit starren Wänden beziehungsweise Maschen beim Behälter aus einem Gewebesack- treten ebensoviel minimale Luftströme aus, die in Wirbelform auftreten und Pfeifgeräusche erzeugen.

Es hat nicht an Anstrengungen gefehlt, Rasenmähergeräusche zu dämmen. Dabei stand jedoch das Motorgeräusch im Mittelpunkt, während man die aerodynamisch bedingten Geräusche nicht systematisch bekämpft hat.

Die Geräuschdämmung wird in nächster Zeit verschärften gesetzgeberischen Anforderungen unterliegen. Die derzeitigen Geräuschpegel liegen bei 96 db und darüber. Anzustreben und demnächst gesetzlich vorgeschrieben sind 94 db. Diese Anforderung wird dadurch verschärft, dass künftig jedes einzelne Exemplar einer Baureihe den Anforderungen genügen muss, so dass die Hersteller aus Sicherheitsgründen den Geräuschpegel noch auf einen unter 94 db liegenden Wert auslegen müssen.

Aus der DE 20107166U ist ein Rasenmäher mit einer Grasfangeinrichtung bekannt geworden, wobei der Grasfangsack mit einer Haltevorrichtung zur lösbaren Festlegung des Grasfangsackes an dem Rasenmäher versehen ist und der Grasfangsack von einer Haube im wesentlichen allseitig ganzflächig mit Abstand umschlossen ist, wobei die Haube zur Grünfläche geöffnet ist.

Die US-A-4310998 offenbart einen Grasfangsack, der insbesondere an einen Rasentraktor angeschlossen werden kann, wobei dieser Grasfangsack für einen Rasentraktor einen Auswurf im wesentlichen in Richtung der Grasfläche aufweist.

EP-A-610062 veröffentlicht eine Grasfangeinrichtung für einen Rasenmäher, die eine an zwei Seiten offene Box aufweist wobei der Luftstrom gegen den Rasen umgelenkt wird um der Geräuschpegel zu verringern.

Der Erfindung liegt die Aufgabe zugrunde, einen gemäß dem Oberbegriff des Anspruch 1 bekannten einen Rasenmäher zu verbessern

Diese Aufgabe wird durch die Merkmale der unabhängigen Ansprüche gelöst.

Der Erfinder hat Folgendes erkannt:
Entscheidenden Anteil an der aerodynamisch bedingten Geräuscherzeugung hat der den Grasfangbehälter verlassende, vom Messer erzeugte Luftstrom. Dieser unterliegt Schallschwingungen, die sich als Geräusch bemerkbar machen, das in der Umgebung als besonders unangenehm empfunden wird. Der Erfinder hat weiterhin erkannt, dass eine entscheidende Abhilfe dann erzielt wird, wenn der austretende Luftstrom gegen die Rasenfläche umgelenkt wird, so dass er auf diese auftrifft. Die Auftreffrichtung soll dabei möglichst vertikal sein. Der Erfinder hat nämlich weiterhin erkannt, dass eine Rasenfläche in idealer Weise als Schallschlucker geeignet ist. Dabei soll gemäß der Erfindung eine solche Umlenkung des Luftstromes gegen die Rasenfläche in jeden Falle stattfinden, ungeachtet dessen, ob ein Grasfangbehälter verwendet wird, oder nicht. Wird ein Grasfangbehälter verwendet, so wird der den Grasfangbehälter verlassende Luftstrom - zusammengesetzt aus einer Vielzahl von Teilströmen - umgelenkt.

Der Rasenmäher gemäß Anspruchs 1 bringt im einzelnen die folgenden Vorteile:
* Der Geräuschpegel wird ganz erheblich abgesenkt, im allgemeinen um zwei oder mehr db.
* Wird der Rasenmäher gemäß der ersten Ausführungsform der Erfindung ohne Grasfangbehälter betrieben, so dient in einem solchen Fall die Box selbst als Fangraum für das abgeschlagene Gras.
* Ist der Rasenmäher aber mit einem Grasfangbehälter ausgerüstet, so gelangt der grasführende Luftstrom zunächst in den Grasfangbehälter, und tritt sodann durch dessen Perforationen aus. Sodann wird er wiederum durch die erfindungsgemäße Box in der genannten Weise umgelenkt und gegen den Rasen hingerichtet.
* Mit dem Wegfall der Klappe entfällt ein Strömungshindernis für den Luftstrom. Der Strömungswiderstand ist somit geringer, so daß die zur Förderung des abgeschlagenen Grases notwendige Förderenergie ebenfalls geringer ist. Die Messer der Schneideinrichtung brauchen somit nur in geringerem Maße eine Förderfunktion zu erfüllen und können daher unter einem kleineren Winkel gegen die Horizontale angestellt sein. Dies bedeutet eine Energieeinsparung sowie zugleich eine Verringerung des Geräuschpegels.
* Die Box bietet einen guten Rundumschutz gegen herumfliegendes Gras, ungeachtet dessen, ob ein Grasfangbehälter verwendet wird, oder nicht. Selbst bei Verwendung eines Grasfangbehälters ist der den Grasfangbehälter verlassende Luftstrom nämlich immer noch mit Graspartikeln behaftet.

Weitere vorteilhafte Ausgestaltungen sind Gegenstand der Unteransprüche.

Die Erfindung ist anhand der Zeichnung näher erläutert. Darin ist im einzelnen Folgendes dargestellt:
- Figur 1: zeigt in perspektivischer Darstellung eine erste Version eines Rasenmähers im Betriebszustand.
- Figur 2: zeigt den Rasenmäher von Figur 1 in einer Arbeitspause.
- Figur 3: zeigt eine zweite Version eines Rasenmähers in perspektivischer Darstellung im Betriebszustand.
- Figur 4: zeigt den Rasenmäher gemäß Figur 3 in einer Arbeitspause.
- Figur 5: zeigt den Gegenstand von Figur 3 in Seitenansicht.
- Figur 6: zeigt den Gegenstand von Figur 3 in Draufsicht.
- Figur 7: zeigt den Gegenstand von Figur 4 in Seitenansicht.
- Figur 8: zeigt einen Rasenmäher in einer Seitenansicht, teilweise im Schnitt.
- Figur 9: zeigt den Gegenstand gemäß Figur 8 in einer Schnittansicht A - A.
- Figur 10: zeigt eine Schnittansicht eines weiteren Rasenmähers analog der Schnittansicht gemäß Figur 9.

Die Rasenmäher beider Versionen weisen die folgenden wesentlichen Teile auf: Als Motor ist ein Viertakt-Benzinmotor 1 vorgesehen, von dem hier nur eine Abdeckung erkennbar ist. Der Motor weist eine vertikale Abtriebswelle auf.

Man erkennt ein Gehäuse 2. Dieses umschließt mit seinem unteren, zylindrischen Teil eine hier nicht erkennbare Schneideinrichtung. Die Abdeckung des Motors 1 kann integraler Bestandteil des Gehäuses 2 sein.

Der Rasenmäher weist vier Räder 3 auf. Diese können vom Motor angetrieben sein. Dies ist jedoch nicht notwendigerweise der Fall.

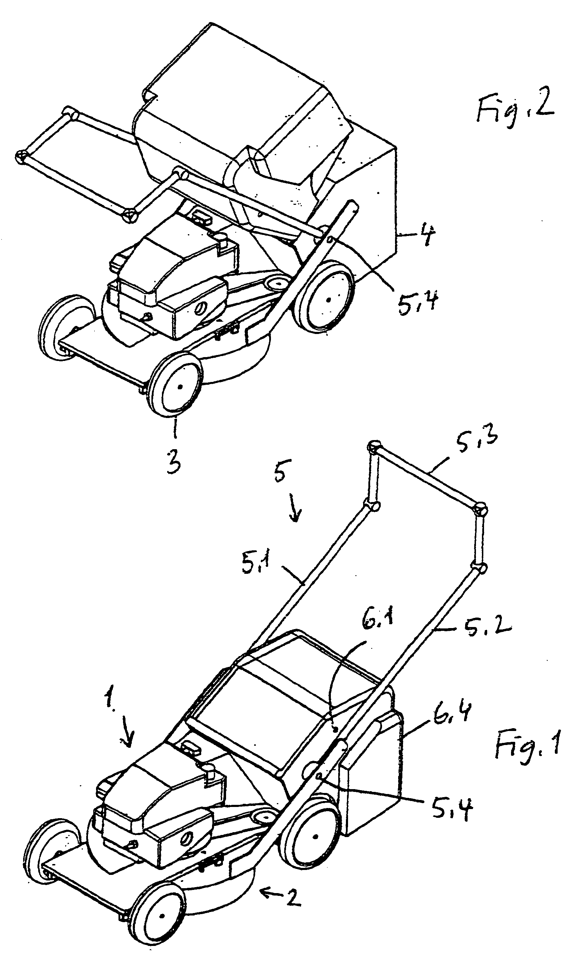

Ein wichtiges Bauteil ist ein Grasfangbehälter 4. Im vorliegenden Falle handelt es sich dabei um einen Kasten mit starren Wänden - hier in Figur 2 erkennbar.

Der Grasfangbehälter 4 ist an das Gehäuse abnehmbar angesetzt und verriegelt. Das Gehäuse 2 hat einen Auslass, und der Grasfangbehälter hat einen Einlass - beide hier nicht erkennbar. Auslass und Einlass sind deckungsgleich, so dass das Innere des Gehäuses 2 und das Innere des Grasfangbehälters 4 miteinander in leitender Verbindung stehen. Der Grasfangbehälter ist außerdem perforiert. Als Perforation können Schlitze oder Bohrungen oder sonstige Löcher dienen.

Man erkennt ferner einen Führungsholm 5. Dieser umfasst zwei Schenkel 5.1, 5.2 sowie einen diese beiden miteinander verbindenden Steg 5.3. Der Führungsholm 5 ist am Gehäuse 2 befestigt. Dabei ist er um eine horizontale Schwenkachse 5.4 verschwenkbar - siehe Figur 2.

Das wichtige, erfindungsgemäße Bauteil ist eine Luftleiteinrichtung 6. Diese besteht im vorliegenden Falle aus einer starren Box. Sie ist derart gestaltet, dass sie über den Grasfangbehälter 4 stülpbar ist. Siehe Figur 1. Dabei ist die Box nach unten, somit gegen den Rasen hin offen.

Bei der Ausführungsform gemäß der Figuren 1 und 2 ist die Box 6 umklappbar - in derselben Richtung wie der Holm 5. Die Drehachse wird hierbei im allgemeinen dieselbe sein wie jene des Holmes 5, nämlich die Drehachse 5.4.

Die Box 6 weist an wenigstens einer ihrer Seitenwände einen Mitnehmerzapfen 6.1 auf. Dieser ist derart angeordnet, dass der Holm 5 die Box 6 dann mitnimmt, wenn er verschwenkt wird. Dabei ist der Mitnehmer 6.1 derart angeordnet, dass der Führungsholm 5 zunächst eine gewisse Verschwenkbewegung ausführt, ohne die Box 6 mitzunehmen.

Beim Betrieb des Rasenmähers und damit auch des Motors 1 wird von der Luftleiteinrichtung Gras abgeschlagen. Die Schneideinrichtung erzeugt in bekannter Weise einen Gras-Luftstrom, d.h. einen Luftstrom, der Gras mit sich führt. Dieser Gras-Luftstrom gelangt in den Grasfangbehälter 4. Das Gras des Gras-Luftstromes verbleibt im Grasfangbehälter 4, während die Luft durch die genannten Perforationen des Grasfangbehälters 4 austritt, und zwar in Gestalt einer Vielzahl von Teil-Luftströmen - somit durch jede Perforation ein Teil-Luftstrom.

Die Box 6 ist auf ihrer hier nicht gezeigten Innenseite derart gestaltet, dass die zahlreichen Teil-Luftströme, die aus der Perforation des Grasfangbehälters 4 austreten, umgelenkt werden, und zwar möglichst senkrecht gegen die Rasenfläche. Diese hat eine schallschluckende Wirkung. Die Box 6 führt aufgrund ihrer Umlenkung zu einer ganz erheblichen Absenkung des Schallpegels.

Bei dem in Figur 2 dargestellten Zustand kann der Grasfangbehälter 4 vom Gehäuse 2 abgenommen und dessen Inhalt entleert werden.

Bei der in den Figuren 1 und 2 dargestellten Version ist die Box 6 einteilig.

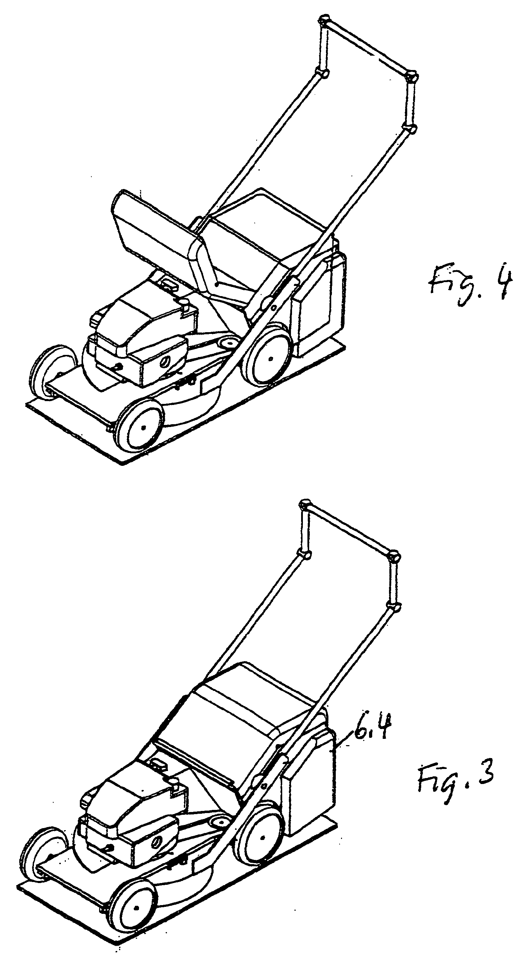

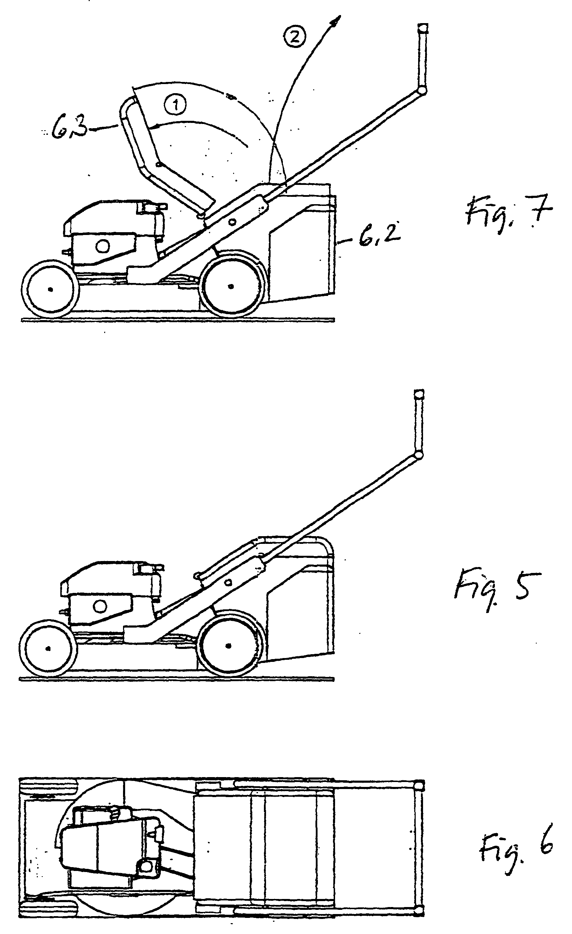

Bei der zweiten Version gemäß der Figuren 3 bis 7 ist die Box 6 anders ausgeführt. Bei der Version gemäß den Figuren 3 bis 7 ist die Box 6 fest angebaut und kann wie in den Figuren 3 bis 7 gezeigt, einen Deckel 6.3 umfassen. Die Box 6 kann dann beispielsweise, wie in den Figuren 3 bis 7 gezeigt, aus einem Grundkörper 6.2 und einem Deckel 6.3 bestehen. Der Deckel 6.3 ist im Betriebszustand des Rasenmähers gesehen an der Oberseite des Grundkörpers angeordnet und aufklappbar. Diesbezüglich wird auf die Figuren 4 und 7 verwiesen. Wird eine derartige Ausführungsform mit einem Grasfangbehälter betrieben, so lässt sich der Grasfangbehälter, der vorliegend nicht dargestellt ist bei geöffnetem Deckel 6.3 von oben in die Box 6 einsetzen und zur Entleerung nach oben herausnehmen. Dies kann einen Bedienungsvorteil sein, weil das Einsetzen und/oder Herausnehmen des Grasfangbehälters 4 nach oben für eine Bedienungsperson leichter sein kann als das Abnehmen in horizontaler Richtung wie bei Rasenmähern gemäß dem Stand der Technik. Im Betrieb mit eingesetztem Grasfangbehälter ist der Deckel 6.3 geschlossen.

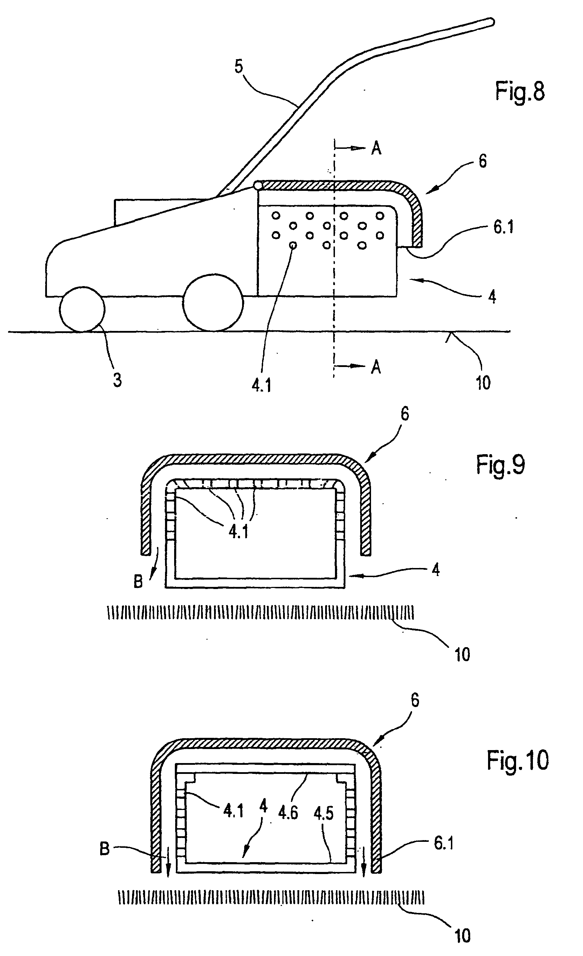

Der in Figur 8 gezeigte Rasenmäher weist wiederum ein Gehäuse 2 auf, Räder 3, einen Grasfangbehälter 4, einen Führungsholm 5 sowie eine Box 6.

Der Grasfangbehälter 4 ist ein starrer Kasten aus Kunststoff. Er ist an seinen beiden Seitenflächen sowie auf seiner Oberseite mit Perforationen 4.1 versehen. Der größte Teil seiner Außenfläche ist von der Box 6 umhüllt. Die Box 6 ist am Gehäuse angelenkt, so dass sie hochgeschwenkt werden kann.

Entscheidend ist Folgendes:
Die Unterkante 6.1 des Grasfangbehälters reicht nach unten über die Perforationen 4.1 hinaus. Dies bedeutet, dass alle Luft, die aus dem Grasfangbehälter 4 durch die Perforationen 4.1 austritt, von der Box 6 aufgefangen wird. Zwischen der Außenfläche des Grasfangbehälters 4 und der Innenfläche der Box 6 ist im dargestellten Betriebszustand ein Zwischenraum gebildet, der als Kanal wirkt, und durch welchen die aufgefangene Luft in Richtung auf die Austrittskante 6.1 der Box 6 strömt, und nach unten gegen den Rasen 10 gerichtet wird.

Man erkennt dies auch aus den Figuren 9 und 10. Siehe die Pfeile B, die die strömende Luft veranschaulichen.

Bei der Ausführungsform gemäß Figur 10 ist der Grasfangbehälter 4 aus einem Grundkörper 4.5 und einem Deckel 4.6 zusammengesetzt. Nach dem Hochschwenken der Box 6 ist der Deckel 4.6 des Grasfangbehälters 4 abnehmbar.

Wie man sieht, befindet sich die Unterkante 6.1 der Box 6 dicht über dem Rasen. Sie kann derart weit herabgezogen sein, dass sie bei Betrieb den Rasen berührt. Im Allgemeinen wird man aber einen Abstand von 5, 10, 15, 20, 25 cm über dem Rasen 10 anstreben.

Wie man aus allen Figuren recht gut erkennt, ist die Box 6 unterhalb des Holmes 5 sehr breit. Sie überragt in Draufsicht gesehen die beiden Schenkel 5.1 und 5.2 des Holms 5 durch seitliche Ausbuchtungen 6.4.

Die Ausführungsbeispiele erläutern zwar die Erfindung anhand eines Rasenmähers mit Grasfangbehälter. Es versteht sich jedoch, dass die Erfindung - wie oben erwähnt - sehr wohl auch bei Rasenmähern angewandt werden kann, die keinen Grasfangbehälter haben. Dies lässt beispielsweise das ungehinderte Mähen einer Wiese zu.

Ferner lässt sich die Erfindung bei jeglichen Bauarten von Rasenmähern einsetzten, somit auch bei solchen ohne Fahrwerk, oder bei Rasenmähern, die mit einem Personensitz ausgestattet sind.

Der Grasfangbehälter 4 kann Perforationen an unterschiedlichen Stellen aufweisen:
- Entweder an seiner Oberseite, oder an einer oder beiden Seitenwänden, oder an einer Rückwand, oder an allen diesen Wänden.

## Patentansprüche

1. Rasenmäher
1.1 mit einer um eine vertikale Achse umlaufenden Schneideinrichtung;
1.2 mit einem Motor (1);
1.3 mit einem Gehäuse (2), das den Motor (1) und die Schneideinrichtung umgibt, und das einen in Fahrtrichtung nach hinten gerichteten Auslass für einen grasführenden Luftstrom aufweist;
1.4 mit einem Führungsholm (5), der am Gehäuse (2) angreift;
1.5 mit einer Luftleiteinrichtung in Gestalt einer Box (6) wobei
1.5.1. die Box auf zwei Seiten offen ist;
1.5.2. die eine offene Seite steht mit dem Gehäuseauslass in leitender Verbindung steht;
1.5.3. die andere offene Seite gegen den Rasen gerichtet ist;
1.5.4. die Box (6) derart gestaltet ist; dass der von der Schneideinrichtung erzeugte Luftstrom gegen den Rasen hin umgelenkt wird,
1.6 die Box (6) entlang einer horizontalen Schwenkachse an das Gehäuse (2) angelenkt und hochklappbar ist, **dadurch gekennzeichnet, daß**
1.7 der Führungsholm (5) am Gehäuse (2) angelenkt ist und beim Verschwenken aus einer Betriebsposition die Box (6) mitnimmt.

2. Rasenmäher nach Anspruch 1, **dadurch gekennzeichnet, dass**
2.1 der Rasenmäher mit einem Grasfangbehälter (4) ausgestattet ist, der mit seinem Einlaß am Auslass des Gehäuses (2) anschließbar ist;
2.2 die Box (6) ist über den Grasfangbehälter (4) stülpbar.

3. Rasenmäher nach Anspruch 2, **dadurch gekennzeichnet, dass** die Box (6) derart gestaltet ist, dass sie wenigstens den größten Teil der aus dem Grasfangbehälter (4) austretenden Luft auffängt.

4. Rasenmäher nach Anspruch 1, **dadurch gekennzeichnet, dass** der Rasenmäher keinen Grasfangbehälter (4) umfasst und die Box (6) selbst als Fangraum für das abgeschlagene Gras dient.

5. Rasenmäher nach einem der Ansprüche 1 bis 4, **gekennzeichnet durch** eine solche Anordnung, dass die Hochklappbewegung der Box (6) erst dann beginnt, wenn der Führungsholm (5) bereits um einen bestimmten Winkel aus seiner Betriebsposition verschwenkt ist.

6. Rasenmäher nach einem der Ansprüche 1 bis 5, **dadurch gekennzeichnet, dass** die Box (6) auf ihrer in Betriebsposition oberen Seite einen Deckel aufweist.

7. Rasenmäher nach einem der Ansprüche 1 bis 6, **dadurch gekennzeichnet, dass** die Box (6) unterhalb des Führungsholms (5) eine größere Breite aufweist, als die lichte Weite des Führungsholms.

8. Rasenmäher nach einem der Ansprüche 1 bis 7, **dadurch gekennzeichnet, dass** die Box (6) aus einem Grundkörper und einem Deckel besteht, der sich - im Betriebszustand des Rasenmähers gesehen - an der Oberseite des Grundkörpers befindet.

9. Rasenmäher nach Anspruch 8, **dadurch gekennzeichnet, dass** die Box (6) derart ausgestaltet ist, dass in den Grundkörper bei weggeklapptem Deckel ein Grasfangbehälter herausnehmbar eingesetzt werden kann.

10. Rasenmäher nach einem der Ansprüche 1 bis 8 **dadurch gekennzeichnet, dass** sich die Mündung der gegen den Rasen gerichteten offenen Seite der Box (6) auf der Höhe der Rasenoberfläche oder in einem geringen Abstand von höchstens 25 Zentimeter hierüber befindet.

## Claims

1. A lawnmower
1.1 with a cutting device revolving about a vertical axis;
1.2 with a motor (1);
1.3 with a housing (2) enclosing the motor (1) and the cutting device, and comprising an outlet for a grass-laden air stream facing rearward in the driving direction;
1.4 with a guide spar (5) acting upon the housing (2);
1.5 with an air guide device in the form of a box (6);
1.5.1 with the box being open at two sides;
1.5.2 with the one open side being in conductive connection with the housing outlet;
1.5.3 with the other side facing the lawn;
1.5.4 with the box being configured in such a way that the air stream produced by the cutting device is deflected against the lawn;
1.6 with the box (6) being linked to the housing (2) along a horizontal pivoting axis and being upwardly tiltable, **characterized in that**
1.7 the guide spar (5) is linked to the housing (2) and entrains the box (6) during the pivoting from an operating position.

2. A lawnmower according to claim 1, **characterized in that**
2.1 the lawnmower is equipped with a grass-catching container (4) which can be connected with its inlet to the outlet of the housing (2);
2.2the box (6) can be placed over the grass-catching container (4).

3. A lawnmower according to claim 2, **characterized in that** the box (6) is configured in such a way that it catches at least the major part of the air emerging from the grass-catching container.

4. A lawnmower according to claim 1, **characterized in that** the lawnmower does not comprise a grass-catching container (4) and the box (6) per se is used as a catching chamber for the cut grass.

5. A lawnmower according to one of the claims 1 to 4, **characterized by** such an arrangement that the upward tilting movement of the box (6) will only start when the guide spar (5) has already been swiveled about a certain angle from its operating position.

6. A lawnmower according to one of the claims 1 to 5, **characterized in that** the box (6) comprises a cover on its side which is the upper one in the operating position.

7. A lawnmower according to one of the claims 1 to 6, **characterized in that** the box (6) has a larger width below the guide spar (5) than the clearance of the guide spar.

8. A lawnmower according to one of the claims 1 to 7, **characterized in that** the box (6) consists of a basic body and a cover which is situated at the upper side of the basic body, as seen in the operating state of the lawnmower.

9. A lawnmower according to claim 8, **characterized in that** the box (6) is configured in such a way that a grass-catching container can be inserted removably into the basic body when the cover is tilted away.

10. A lawnmower according to one of the claims 1 to 8, **characterized in that** the orifice of the open side of the box (6) facing the lawn is situated at the level of the lawn surface or at a small distance of not more than 25 centimeters above the same.

## Revendications

1. Tondeuse à gazon
1.1 avec un dispositif de coupe tournant autour d'un axe vertical ;
1.2 avec un moteur (1) ;
1.3 avec un capot (2) qui entoure le moteur (1) et le dispositif de coupe et qui possède une sortie dirigée vers l'arrière dans le sens de la marche pour un flux d'air transportant de l'herbe ;
1.4 avec un longeron de guidage (5) qui se met en prise sur le capot (2) ;
1.5 avec un dispositif de guidage d'air prenant la forme d'un boîtier (6),
1.5.1 lequel boîtier est ouvert de deux côtés ;
1.5.2 un côté ouvert communiquant en vue du guidage avec la sortie du capot ;
1.5.3 l'autre côté ouvert étant dirigé vers la pelouse ;
1.5.4 le boîtier (6) étant construit de telle sorte que le flux d'air produit par le dispositif de coupe soit dévié vers la pelouse ;
1.6 le boîtier (6) étant articulé sur le capot (2) sur un axe de pivotement horizontal et pouvant être relevé,
**caractérisée en ce que** :
1.7 le longeron de guidage (5) est articulé sur le capot (2) et entraîne le boîtier (6) lorsqu'il pivote à partir d'une position de fonctionnement.

2. Tondeuse à gazon selon la revendication 1, **caractérisée en ce que**
2.1 la tondeuse à gazon est équipée d'un récipient collecteur d'herbe (4) dont l'entrée peut être raccordée à la sortie du capot (2) ;
2.2 le boîtier (6) peut être emboîté par-dessus le récipient collecteur d'herbe (4).

3. Tondeuse à gazon selon la revendication 2, **caractérisé en ce que** le boîtier (6) est conçu de telle manière qu'il capte la majeure partie au moins de l'air sortant du récipient collecteur d'herbe (4).

4. Tondeuse à gazon selon la revendication 1, **caractérisée en ce qu'**elle ne possède pas de récipient collecteur d'herbe (4) et le boîtier (6) sert lui-même de volume collecteur pour l'herbe fauchée.

5. Tondeuse à gazon selon l'une quelconque des revendications 1 à 4, **caractérisée en ce qu'**elle comporte une disposition telle que le mouvement de relevage du boîtier (6) ne commence que lorsque le longeron de guidage (5) a déjà pivoté selon un angle donné à partir de sa position de fonctionnement.

6. Tondeuse à gazon selon l'une quelconque des revendications 1 à 5, **caractérisée en ce que** le boîtier (6) présente un couvercle sur sa face supérieure dans la position de fonctionnement.

7. Tondeuse à gazon selon l'une quelconque des revendications 1 à 6, **caractérisée en ce que** le boîtier (6) est plus large en-dessous du longeron de guidage (5) que la largeur libre du longeron de guidage.

8. Tondeuse à gazon selon l'une quelconque des revendications 1 à 7, **caractérisée en ce que** le boîtier (6) se compose d'un corps et d'un couvercle qui se trouve sur la face supérieure du corps, vu dans la position de fonctionnement de la tondeuse.

9. Tondeuse à gazon selon la revendication 8, **caractérisée en ce que** le boîtier (6) est conformé de telle sorte qu'un récipient collecteur d'herbe puisse être introduit dans le corps lorsque le couvercle est écarté.

10. Tondeuse à gazon selon l'une quelconque des revendications 1 à 8, **caractérisée en ce que** l'embouchure du côté ouvert du boîtier (6) orienté vers la pelouse se trouve à la hauteur de la surface de la pelouse ou à une faible distance, de 25 centimètres au maximum, au-dessus de celle-ci.
